# EUROPÄISCHE PATENTSCHRIFT

(11) **EP 1 443 220 B1**
(45) Veröffentlichungstag und Bekanntmachung des Hinweises auf die Patenterteilung: **05.04.2006**
(21) Anmeldenummer: 04001103.3
(22) Anmeldetag: 20.01.2004
(51) Int. Cl.: F15B 21/04, F16H 61/40

(54) **Hydraulischer Kreislauf und Spülvorrichtung**
Hydraulic circuit and flushing device
Circuit hydraulique et dipositif d'échange

(30) Priorität: 31.01.2003 DE 10303936
(43) Veröffentlichungstag der Anmeldung: 04.08.2004
(73) Patentinhaber: Brueninghaus Hydromatik GmbH, 89275 Elchingen (DE)
(72) Erfinder: Essig, Heinz-Gerhard, 89173 Lonsee (DE)
(74) Vertreter: Körfer, Thomas

(56) Entgegenhaltungen:
- EP-A- 0 841 506
- US-B1- 6 339 928
- PATENT ABSTRACTS OF JAPAN vol. 011, no. 247 (M-615), 12. August 1987 (1987-08-12) -& JP 62 055271 A (HITACHI CONSTR MACH CO LTD), 10. März 1987 (1987-03-10)
- PATENT ABSTRACTS OF JAPAN vol. 1996, no. 04, 30. April 1996 (1996-04-30) -& JP 07 329628 A (KAYABA IND CO LTD), 19. Dezember 1995 (1995-12-19)

## Beschreibung

Die Erfindung betrifft einen hydraulischen Kreislauf gemäß dem Oberbegriff des Anspruchs 7 und eine Spülvorrichtung für einen hydraulischen Kreislauf, gemäß dem Oberbegriff des Anspruchs 1.

Ein solcher hydraulischer Kreislauf ist aus US 6 339 928 B bekannt und eine solche Spülvorrichtung ist aus JP 62055271 A bekannt.

Hydraulische Anlagen, wie beispielsweise hydrostatische Antriebe, erwärmen sich während des Betriebs. Diese Erwärmung betrifft sowohl die Pumpen- und Motoreinheiten als auch das in dem jeweiligen hydraulischen Kreislauf umgewälzte Druckmittel. Um eine zu große Hitzeentwicklung zu verhindern ist es daher z. B. aus dem Datenblatt RD 95 512/12.98 der Firma BRUENINGHAUS HYDROMATIK bekannt, in einen hydraulischen Kreislauf eines hydrostatischen Antriebs ein Spül- und Speisedruckventil zu integrieren, durch welches aus dem hydraulischen Kreislauf eine definierte Spülölmenge entnommen wird. Anstelle der entnommenen Spülölmenge wird dem Kreislauf gekühltes Druckmittel, das von einer Hilfspumpe gefördert wird, zugeführt.

Die Entnahme des Druckmittels erfolgt über ein 3/3-Wegeventil, dessen zwei Eingangsanschlüsse mit jeweils einer Arbeitsleitung verbunden sind. In Abhängigkeit von dem jeweils in den Arbeitsleitungen herrschenden Arbeitsdruck wird der Ausgangsanschluss mit derjenigen Arbeitsleitung verbunden, in der der niedrigere Druck herrscht. Dem 3/3-Wegeventil nachgeschaltet und mit dessen Ausgang verbunden ist ein Speisedruckventil. Das Speisedruckventil öffnet, wenn der in der Verbindungsleitung zwischen dem 3/3-Wegeventil und dem Speisedruckventil herrschende Druck einen definierten Grenzwert überschreitet. Bei geöffnetem Speisedruckventil wird der Ausgangsanschluss des 3/3-Wegeventils mit einem Tankvolumen verbunden. Damit ist eine durchströmbare Verbindung aus der Arbeitsleitung mit dem niedrigeren Druck zu dem Tankvolumen geschaffen, wobei in dieser Verbindung eine Drosselstelle vorgesehen ist, um einen definierten Spülölstrom zu erzeugen.

Im allgemeinen wird als Drosselstelle eine Blende vorgesehen. Der durch die Blende strömende Spülölstrom ist daher abhängig von dem stromaufwärts der Blende anliegenden Druck. Solange in der Arbeitsleitung mit dem niedrigeren Druck tatsächlich ein Niederdruck herrscht, der in etwa dem Speisedruck entspricht, ist die durch die Blende strömende Spülölmenge so bemessen, dass durch das gekühlte, neu zugeführte Druckmittel eine der erzeugten Wärmemenge entsprechende Kühlung des hydraulischen Kreislaufs erfolgt.

Nachteilig an der beschriebenen hydraulischen Schaltung ist, dass der Einsatz auf solche Systeme beschränkt bleibt, welche zu jedem Zeitpunkt während des Betriebs einen definierten Niederdruck in einer der beiden Arbeitsleitungen aufweisen. Steigt dagegen z.B. bei Verwendung eines Ölstromteilers oder bei einer Reihenschaltung von mehreren Hydromotoren der niedrigere der beiden Arbeitsleitungsdrücke an, so wird durch das Spül- und Speisedruckventil ein entsprechend hoher Spülölstrom durch die Blende in das Tankvolumen erzeugt. Dadurch erhöht sich nicht nur signifikant die nachzufördernde Druckmittelmenge, sondern es erwärmt sich auch das durch die Blende mit hohen Druck gepresste Druckmittel. Der Druck auf der Niederdruckseite des hydraulischen Kreislaufs liegt bei solchen Systemen wie auch bei hydrostatischen Antrieben mit Anti-Schlupf-Regelungen zwischen dem Speisedruck und dem in der förderseitigen Arbeitsleitung herrschenden Hochdruck.

Es ist die Aufgabe der Erfindung, einen hydraulischen Kreislauf und eine Spülvorrichtung für einen hydraulischen Kreislauf zu schaffen, welcher auch in Systemen mit einem nicht definierten Niederdruck einsetzbar ist.

Die Aufgabe wird durch die erfindungsgemäße Spülvorrichtung nach Anspruch 1 und den hydraulischen Kreislauf nach Anspruch 7 gelöst.

Erfindungsgemäß wird in einem hydraulischen Kreislauf eine Spülvorrichtung mit einer ersten Arbeitsleitung und einer zweiten Arbeitsleitung verbunden, wobei durch ein Ventil der jeweils niedrigere in den Arbeitsleitungen herrschende Druck ausgewählt wird. In Abhängigkeit von diesem Druck wird bei Überschreiten eines ersten Druckschwellwerts eine Verbindung zu einem Tankvolumen erzeugt. Über diese Verbindung, in der eine Drosselstelle zur Bemessung des Spülölstroms vorgesehen ist, wird aus dem hydraulischen Kreislauf aus derjenigen Arbeitsleitung, in der der niedrigere Druck herrscht, eine bestimmte Menge an Druckmittel entnommen, wobei die entnommene Druckmittelmenge von der Höhe des Drucks stromaufwärts der Drossel abhängig ist.

Erfindungsgemäß wird ein zu großer Anstieg der entnommenen Druckmittelmenge dadurch verhindert, dass die Verbindung zu dem Tankvolumen bei Überschreiten eines zweiten, gegenüber dem ersten Druckschwellwert höheren Druckschwellwerts unterbrochen wird. Das Verbinden und Unterbrechen der Verbindung mit dem Tankvolumen erfolgt mittels einer Spülventileinheit, bei der der erste Druckschwellwert und der zweite Druckschwellwert einstellbar sind, so dass der Druckbereich in dem eine Spülung erfolgt, an die jeweiligen Einsatzbedingungen anpaßbar ist.

Die Unteransprüche betreffen vorteilhafte Weiterbildungen der erfindungsgemäßen Spülvorrichtung sowie des hydraulischen Kreislaufs.

Vorteilhafterweise umfasst die Spülventileinheit ein Speisedruckhalteventil und ein Abschaltventil wobei es insbesondere vorteilhaft ist, zumindest das Abschaltventil stromaufwärts einer die Spülölmenge begrenzenden Drosselstelle anzuordnen. Durch eine Anordnung des Abschaltventils stromaufwärts der begrenzenden Drosselstelle werden die Leitungswege, die erforderlich sind, um den in der Arbeitsleitung mit dem niedrigeren Druck herrschenden Druck abzugreifen, verkürzt. Durch die Verkürzung der Leitungswege kann die Spülventileinheit kompakt gestaltet werden, so dass ein Einsatz auch in begrenzten Platzverhältnissen denkbar ist.

Insbesondere ist es auch vorteilhaft das Speisedruckhalteventil und das Abschaltventil als ein einziges, kombiniertes Ventil zusammenzufassen. Dieses integrierte Ventil kann z. B. als 2/3-Wegeventil ausgeführt sein, so dass die Funktion des Erzeugens und Unterbrechens der Verbindung in einem äußerst kompakten Ventil realisiert werden kann.

Weiterhin ist es vorteilhaft, den eingangsseitigen Anschluss der Spülventileinheit über das Verbindungsventil mit der ersten Arbeitsleitung und der zweiten Arbeitsleitung zu verbinden, wobei über die Verbindung der jeweils niedrigere Druck der Arbeitsleitungen zu der Spülventileinheit geführt wird. Das Verbindungsventil weist dabei eine Neutralstellung auf, welches die erste Arbeitsleitung und die zweite Arbeitsleitung gemeinsam mit dem eingangsseitigen Anschluss der Spülventileinheit verbindet. Daraus ergibt sich der Vorteil, dass eine Entnahme von Druckmittel aus dem hydraulischen Kreislauf auch dann erfolgt, wenn in der ersten Arbeitsleitung und in der zweiten Arbeitsleitung ein annähernd gleichgroßer Druck herrscht.

Der hydraulische Kreislauf betrifft besonders vorteilhaft auch solche Kreisläufe mit mehreren Hydromotoren, wobei die zumindest zwei Hydromotoren über einen Volumenstromteiler mit einer Hydropumpe verbunden sind. Durch einen solche Ölstromteiler erhalten die beiden Hydromotoren jeweils einen Volumenstrom des Druckmittels, der in einem definierten Verhältnis zu dem gesamten, von der Hydropumpe geförderten Volumenstrom steht. Dabei ist es insbesondere vorteilhaft, eine Hilfspumpe zum Einspeisen von Druckmittel in den hydraulischen Kreislauf vorzusehen, welche mit einer Hauptleitung, in die die jeweils zweiten Arbeitsleitungen der beiden Hydromotoren zusammengeführt sind, über eine Speiseventileinheit verbunden ist.

Auf der Seite der ersten Arbeitsleitungen der beiden Hydromotoren ist es besonders vorteilhaft, für jede der beiden ersten Arbeitsleitungen eine eigene Speiseventileinheit vorzusehen, welche vorzugsweise in dem Ölstromteiler integriert ist.

Weiterhin ist es möglich, die beiden Hydromotoren seriell miteinander zu verbinden, wobei die zweite Arbeitsleitung des ersten Hydromotors mit der ersten Arbeitsleitung des zweiten Hydromotors zu einer Verbindungsleitung zusammenwirkt. Bei einer solchen seriellen Verschaltung der beiden Hydromotoren wird zwangsläufig ein gleichgroßer Volumenstrom des Druckmittels durch den ersten Hydromotor und den zweiten Hydromotor gefördert. Ist durch einen Hydromotor dabei das maximale übertragbare Moment verringert, so wird ein unbeabsichtigtes Erhöhen der Drehzahl des jeweiligen Hydromotors durch die Begrenzung des maximalen Volumenstroms durch den jeweils anderen Hydromotor verhindert. Die Begrenzung des Druckbereichs, in dem eine Spülung stattfindet, in Richtung hoher Drücke, ermöglicht trotz den sich daraus ergebenden möglichen hohen Drücken auf der Niederdruckseite einen Einsatz eines Spülsystems. Bei einer solchen seriellen Verschaltung von Hydromotoren ist es weiterhin vorteilhaft, für die Verbindungsleitung eine weitere Speiseventileinheit vorzusehen, über die eine Einspeisung von Druckmittel durch die Hilfspumpe in den hydraulischen Kreislauf erfolgt.

Ausführungsbeispiele der erfindungsgemäßen Spülvorrichtung und des erfindungsgemäßen hydraulischen Kreislaufs sind in der Zeichnung dargestellt und werden nachfolgend näher erläutert. Es zeigen:
- Fig. 1: eine schematische Darstellung eines ersten Ausführungsbeispiels eines erfindungsgemäßen hydraulischen Kreislaufs mit einem ersten Ausführungsbeispiel einer erfindungsgemäßen Spülvorrichtung;
- Fig. 2: eine schematische Darstellung des ersten Ausführungsbeispiels eines erfindungsgemäßen hydraulischen Kreislaufs mit einem zweiten Ausführungsbeispiel einer erfindungsgemäßen Spülvorrichtung;
- Fig. 3: eine schematische Darstellung des ersten Ausführungsbeispiels eines erfindungsgemäßen hydraulischen Kreislaufs mit einem dritten Ausführungsbeispiel einer erfindungsgemäßen Spülvorrichtung;
- Fig. 4: eine schematische Darstellung des ersten Ausführungsbeispiels eines erfindungsgemäßen hydraulischen Kreislaufs mit einem vierten Ausführungsbeispiel einer erfindungsgemäßen Spülvorrichtung;
- Fig. 5: eine schematische Darstellung eines zweiten Ausführungsbeispiels eines erfindungsgemäßen hydraulischen Kreislaufs;
- Fig. 6: eine schematische Darstellung eines dritten Ausführungsbeispiels eines erfindungsgemäßen hydraulischen Kreislaufs, und
- Fig. 7: eine schematische Darstellung eines ersten Ausführungsbeispiels eines erfindungsgemäßen hydraulischen Kreislaufs.

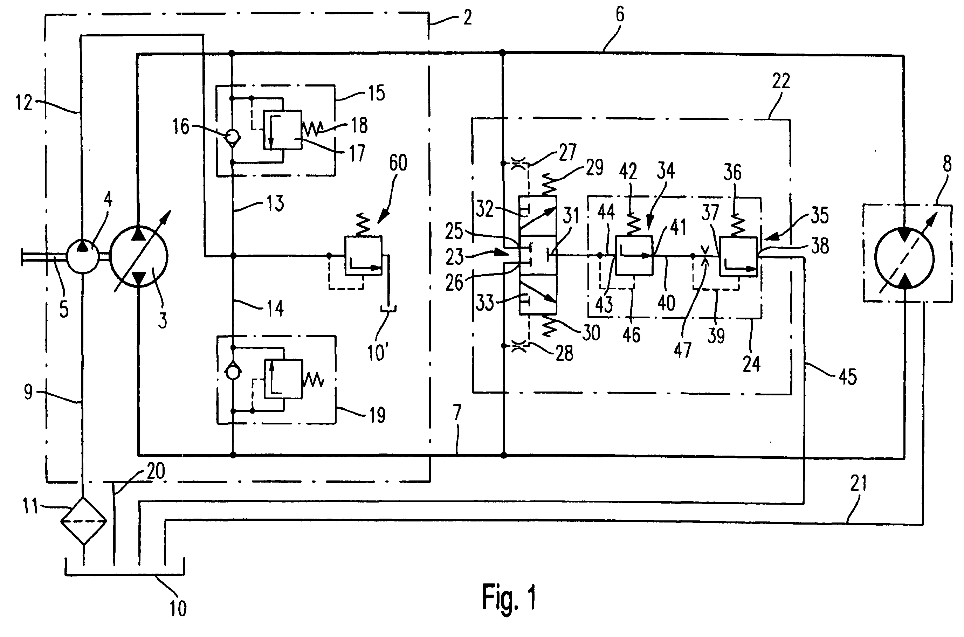

In Fig. 1 ist ein erstes Ausführungsbeispiel für einen erfindungsgemäßen hydraulischen Kreislauf 1 dargestellt. Der hydraulischen Kreislauf 1 umfasst eine Pumpeneinheit 2 mit einer verstellbar ausgeführten Hydropumpe 3 und einer mit der Hydropumpe 3 direkt verbundenen Hilfspumpe 4, wobei die Hilfspumpe 4 und die Hydropumpe 3 gemeinsam über eine Antriebswelle 5 angetrieben werden. Die Antriebswelle 5 ist mit einer Antriebsmaschine verbunden, welche in der Fig. 1 nicht dargestellt ist. Die Hydropumpe 3 ist zur Förderung von Druckmittel in zwei Richtungen ausgelegt und in ihrem Fördervolumen einstellbar. An die Hydropumpe 3 ist eine erste Arbeitsleitung 6 und eine zweite Arbeitsleitung 7 angeschossen, so dass bei einer Förderung von Druckmittel in die erste Arbeitsleitung 6 die erste Arbeitsleitung 6 zur Hochdruckseite und die zweite Arbeitsleitung 7 zur Niederdruckseite des hydraulischen Kreislaufs wird.

Das beispielsweise von der Hydropumpe 3 in die erste Arbeitsleitung 6 geförderte Druckmittel treibt einen Hydromotor 8 an. Der Hydromotor 8 ist vorzugsweise ebenfalls in seinem Schluckvolumen veränderlich.

Zum Befüllen des hydraulischen Kreislaufs 1 mit einem Druckmittel dient die Hilfspumpe 4. Die Hilfspumpe 4 saugt hierzu über eine Saugleitung 9 aus einem Tankvolumen 10 Druckmittel an. An dem tankseitigen Ende der Saugleitung 9 ist vorzugsweise ein Filter 11 angeordnet, welches aus dem angesaugten Druckmittel Schmutzpartikel herausfiltert und damit den hydraulischen Kreislauf 1 und vor allem die darin angeordneten empfindlichen Komponenten wie beispielsweise Ventile vor Verschmutzung schützt.

Die Hilfspumpe 4 fördert das angesaugte Druckmittel in einen Speisekanal 12, der über einen ersten Speisekanalabschnitt 13 mit der ersten Arbeitsleitung 6 verbunden ist. Über einen zweiten Speisekanalabschnitt 14 ist die zweite Arbeitsleitung 7 mit dem Speisekanal 12 verbunden. In dem ersten Speisekanalabschnitt 13 ist eine Speiseventileinheit 15 angeordnet, welche ein Rückschlagventil 16 umfasst, das in Richtung der ersten Arbeitsleitung 6 öffnet. Sinkt der Druck in der ersten Arbeitsleitung 6 unterhalb das Druckniveau in dem Speisekanal 12, so öffnet das Rückschlagventil 16 und das von der Hilfspumpe 4 geförderte Druckmittel wird der ersten Arbeitsleitung 6 zugeführt. Parallel zu dem Rückschlagventil 16 ist in der Speiseventileinheit 15 ein Druckbegrenzungsventil 17 vorgesehen, welches bei Überschreiten eines durch eine Feder 18 festgelegten Grenzwerts für den Arbeitsleitungsdruck in der ersten Arbeitsleitung 6 eine in Schließrichtung des Rückschlagventils 16 durchströmbare Verbindung des ersten Speisekanalabschnitts 13 erzeugt.

In dem zweiten Speisekanalabschnitt 14 ist eine zweite Speiseventileinheit 19 angeordnet, welche entsprechend der ersten Speiseventileinheit 15 aufgebaut ist, wobei das in der zweiten Speiseventileinheit 19 angeordnete Rückschlagventil in Richtung der zweiten Arbeitsleitung 7 öffnet und das Druckbegrenzungsventil wiederum in Schließrichtung des Rückschlagventils eine durchströmbare Verbindung erzeugt.

Durch die beiden Speiseventileinheiten 15 und 19 wird erreicht, dass jeweils diejenige Arbeitsleitung 6 oder 7 mit dem Speisekanal 12 verbunden wird, in der der Arbeitsleitungsdruck unterhalb des Druckniveaus des Speisekanals 12 sinkt. Gleichzeitig wird sichergestellt, dass ein kritischer Druckanstieg in der den Hochdruck führenden Arbeitsleitung 6 oder 7 in Richtung der Niederdruckseite entspannt wird, da auf der Hochdruckseite das Druckbegrenzungsventil öffnet und infolge der so erzeugten Verbindung das Rückschlagventil der jeweils anderen Speiseventileinheit ebenfalls öffnet. Durch ein solches Kurzschließen der ersten Arbeitsleitung 6 und der zweiten Arbeitsleitung 7 werden Druckspitzen, welche die Pumpeneinheit 2 oder die daran angeschlossene Leitungen beschädigen könnten, vermieden. Zur Vermeidung eines zu großen Drucks in dem Speisekanal 12 ist ferner ein Druckbegrenzungsventil 60 vorgesehen, das bei Überschreiten eines kritischen Drucks den Speisekanal 12 mit einem internen Tankvolumen 10' verbindet. Das interne Tankvolumen 10' nimmt auch das Leckagefluid des Hydromotors 3 und der Hilfspumpe 4 auf.

Die Pumpeneinheit 2 ist über eine Pumpenleckageleitung 20 mit dem Tankvolumen 10 verbunden, wobei das in der Pumpeneinheit 2 anfallende Leckagefluid zunächst in dem Gehäuse der Pumpeneinheit 2 gesammelt wird und bei Erreichen einer gewissen Leckagemenge das Leckagefluid in Richtung des Tankvolumens 10 abfließt. Entsprechend ist der Hydromotor 8 über eine Motorleckageleitung 21 mit dem Tankvolumen 10 verbunden.

In dem hydraulischen Kreislauf ist weiterhin eine Spülvorrichtung 22 angeordnet. Die Spülvorrichtung 22 hat die Aufgabe, aus der ersten Arbeitsleitung 6 bzw. der zweiten Arbeitsleitung 7 eine definierte Menge an Druckmittel zu entnehmen, sofern der Druck in derjenigen Arbeitsleitung 6 oder 7, aus der das Druckmittel entnommen wird, innerhalb eines bestimmten Druckbereichs liegt. Die Spülvorrichtung 22 umfasst hierzu ein Verbindungsventil 23 und eine Spülventileinheit 24, die dem Verbindungsventil 23 nachgeschaltet ist.

Das Verbindungsventil 23 weist einen ersten Eingangsanschluss 25 und einen zweiten Eingangsanschluss 26 auf. Der erste Eingangsanschluss 25 ist über einen Verbindungskanal mit der ersten Arbeitsleitung 6 verbunden. Der zweite Eingangsanschluss 26 ist entsprechend mit der zweiten Arbeitsleitung 7 über einen weiteren Verbindungskanal verbunden. Das Verbindungsventil 23 ist im dargestellten Ausführungsbeispiels als 3/3-Wegeventil ausgeführt, wobei es zum Auslenken aus seiner Ruheposition über eine erste Messleitung 27 mit dem Druck der ersten Arbeitsleitung 6 bzw. in entgegengesetzter Richtung über eine zweite Messleitung 28 mit dem Druck der zweiten Arbeitsleitung 7 beaufschlagbar ist. Die erste Messleitung 27 und die zweite Messleitung 28 weisen jeweils eine Drosselstelle auf. Liegen an den Messflächen, die mit der ersten Messleitung 27 bzw. der zweiten Messfleitung 28 verbunden sind näherungsweise gleiche Drücke an, so wird das Verbindungsventil 23 mittels einer ersten Zentrierfeder 29 und einer zweiten Zentrierfeder 30 in seine Ruheposition gebracht.

In der Ruheposition des Verbindungsventils 23 sind der erste Eingangsanschluss 25, der zweite Eingangsanschluss 26 sowie ein Ausgangsanschluss 31 voneinander getrennt. Wird dagegen aufgrund eines Druckunterschieds zwischen der ersten Arbeitsleitung 6 und der zweiten Arbeitsleitung 7 die mit der ersten Messleitung 27 verbundene Messfläche beispielsweise mit einem höheren Druck beaufschlagt als die entgegengesetzt orientierte Messfläche, die über die zweite Messleitung 28 mit der zweiten Arbeitsleitung 7 verbunden ist, so wird das Verbindungsventil 23 in Richtung einer ersten Endposition 32 ausgelenkt. In der ersten Endposition 32 ist über das Verbindungsventil 23 der zweite Eingangsanschluss 26 mit dem Ausgangsanschluss 31 verbunden. Umgekehrt wird bei Übersteigen des Drucks in der zweiten Arbeitsleitung 7 gegenüber der ersten Arbeitsleitung 6 das Verbindungsventil 23 in Richtung seiner zweiten Endposition ausgelenkt, in der der erste Eingangsanschluss 25 mit dem Ausgangsanschluss 31 verbunden ist. Das bedeutet, dass jeweils derjenige Eingangsanschluss 25 bzw. 26 mit dem Ausgangsanschluss 31 verbunden wird, an dem der Druck derjenigen Arbeitsleitung 6 oder 7 anliegt, der im Vergleich zu der anderen Arbeitsleitung 7 oder 6 niedriger ist.

Die Spülventileinheit 24 ist eingangsseitig mit dem Ausgangsanschluss 31 des Verbindungsventils 23 verbunden. In dem dargestellten ersten Ausführungsbeispiel ist die Spülventileinheit 24 als eine Serienschaltung eines Abschaltventils 34 sowie eines Spüldruckhalteventils 35 ausgebildet. Das Spüldruckhalteventil 35 wird durch die Kraft einer ersten Druckfeder 36 in seiner Ausgangsposition gehalten, in der die Verbindung zwischen einem Eingang 37 des Spüldruckhalteventils 35 und einem Ausgang 38 des Spüldruckhalteventils 35 unterbrochen ist.

Entgegengesetzt zu der Kraft der ersten Druckfeder 36 wird eine hydraulische Kraft an einer Messfläche des Spüldruckhalteventils 35 erzeugt, wobei die Messfläche über eine dritte Messleitung 39 mit einem Verbindungskanal 40 verbunden ist. Der Verbindungskanal 40 verbindet einen Ausgang 41 des Abschaltventils 34 mit dem Eingang 37 des Spüldruckhalteventils 35. Übersteigt die an der Messfläche des Spüldruckhalteventils 35 angreifende hydraulische Kraft die Kraft der entgegengesetzt wirkenden ersten Druckfeder 36, so wird der Eingang 37 des Spüldruckhalteventils 35 mit dem Ausgang des Spüldruckhalteventils 38 verbunden. Über die erste Druckfeder 36 wird damit ein erster Druckschwellwert festgelegt.

Das Abschaltventil 34 wird über die Kraft einer zweiten Druckfeder 42 in seiner Ausgangsposition gehalten, in der ein Eingang 43 des Abschaltventils 34 mit dem Ausgang 41 des Abschaltventils 34 verbunden ist. In diesem Betriebzustand, in dem sich das Abschaltventil 34 in seiner Ausgangsposition befindet und das Spüldruckhalteventil 35 bereits geöffnet hat, ist ein Eingangskanal 44 folglich mit einer an dem Ausgang 38 des Spüldruckhalteventils 35 angeordneten Tankanschlußleitung 45 verbunden. Der Eingangskanal 44 verbindet den Ausgangsanschluss 31 des Verbindungsventils 23 mit dem Eingang 43 des Abschaltventils 34.

Entgegengesetzt der Kraft der zweiten Druckfeder 42 wirkt auf eine Messfläche des Abschaltventils 34 eine hydraulische Kraft, welche durch einen der Messfläche über eine vierte Messleitung 46 zugeführten Druck des Eingangskanals 44 erzeugt wird. Durch die zweite Druckfeder 42 wird damit ein zweiter Druckschwellwert festgelegt, oberhalb dessen das Abschaltventil 34 aus seiner Ausgangsposition ausgelenkt wird. Übersteigt also der Druck in dem Eingangskanal 44 den durch die zweite Druckfeder 42 festgelegten zweiten Druckschwellwert so wird durch das Abschaltventil 34 die Verbindung zwischen dem Ausganganschluss 31 des Verbindungsventils 23 und der Tankanschlußleitung 45 unterbrochen. Durch die Spülventileinheit 24 ist daher eine Entnahme von Druckmittel aus der ersten Arbeitsleitung 6 bzw. der zweiten Arbeitsleitung 7 auf einen Druckbereich begrenzt, der zwischen einem niedrigeren ersten Druckschwellwert und einem höheren zweiten Druckschwellwert liegt, wobei der erste und zweite Druckschwellwert durch das Spüldruckhalteventil 35 bzw. das Abschaltventil 34 festgelegt werden.

Liegt der niedrigere der in der ersten Arbeitsleitung 6 bzw. der zweiten Arbeitsleitung 7 herrschenden Drücke innerhalb dieses Bereichs, so wird über das Verbindungsventil 23 und die nachgeschaltete Spülventileinheit 24 Druckmittel aus der entsprechenden Arbeitsleitung 6 oder 7 entnommen. Dieses entnommene Druckmittel strömt über die Tankanschlußleitung 45 in das Tankvolumen 10. Um eine definierte Spülölmenge aus dem hydraulischen Kreislauf zu entnehmen, ist eine Drosselstelle 47 vorgesehen, welche in dem dargestellten Ausführungsbeispiel in dem Verbindungskanal 40 angeordnet ist. Die Drossel liegt dabei stromabwärts der Verbindungsstelle der dritten Messleitung 39 mit dem Verbindungskanal 40. Ebenso ist auch die Anordnung der Drosselstelle 47 stromabwärts des Spüldruckhalteventils 35 möglich.

Das über die Tankanschlußleitung 45 in das Tankvolumen geförderte Druckmittel wird gekühlt und anschließend über das Filter 11 und die Saugleitung 9 von der Hilfspumpe 4 angesaugt und dem hydraulischen Kreislauf wieder zugeführt.

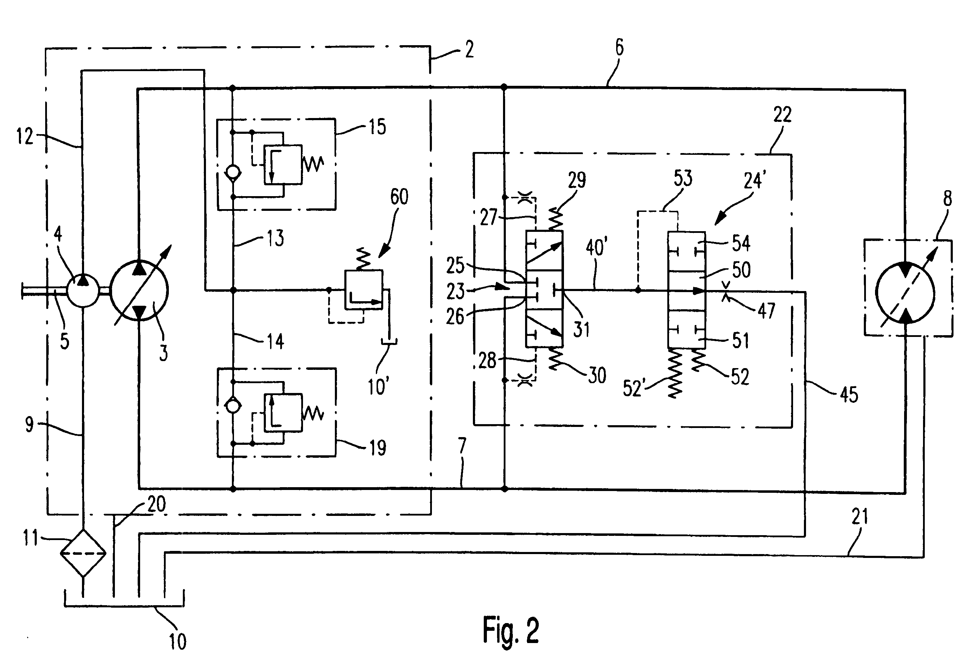

Das zweite, in der Fig. 2 dargestellte Ausführungsbeispiel des erfindungsgemäßen hydraulischen Kreislaufs verwendet anstelle einer Spülventileinheit mit seriell geschaltetem Spüldruckhalteventil und Abschaltventil wie in Fig.1 eine Spülventileinheit 24' mit einem integrierten Ventil 50. Das integrierte Ventil 50 weist drei Schaltpositionen auf, wobei in den beiden Endpositionen des integrierten Ventils 50 die Verbindung zwischen dem Ausganganschluss 31 des Verbindungsventils 23 und dem Tankanschluß 45 unterbrochen ist.

Das integrierte Ventil 50 wird in Richtung seiner ersten Endposition 51 durch zwei Druckfedern 52 und 52' mit einer Kraft beaufschlagt. Dabei wird durch eine der beiden Druckfedern 52 und 52' ein erster Druckschwellwert festgelegt. Überschreitet der Druck in dem Verbindungskanal 40' diesen ersten Druckschwellwert, so wird das integrierte Ventil 50 durch die an seiner Messfläche anliegende hydraulische Kraft in die in der Fig. 2 dargestellte Mittelstellung gebracht. Die Messfläche des integrierten Ventils 50 wird hierzu über eine fünfte Messleitung 53 mit dem Verbindungskanal 40 verbunden. Steigt der Druck in dem Verbindungskanal 40' weiter an, so wirkt an der Messfläche eine entsprechende höhere hydraulische Kraft. Diese hydraulische Kraft bringt das integrierte Ventil 50 bei Überschreiten eines zweiten Druckschwellwerts, der durch die beiden Druckfedern 52 und 52' festgelegt ist, in seine zweite Endposition 54, so dass die Verbindung zu der Tankanschlußleitung 45 wieder unterbrochen ist.

Das integrierte Ventil 50 vereint damit die beiden Funktionen, welche in der Spülventileinheit 24 aus Fig. 1 auf das Spüldruckhalteventil 35 und das Abschaltventil 34 aufgeteilt waren. Die Drosselstelle 47 ist stromabwärts des integrierten Ventils 50 angeordnet und erzeugt wiederum eine definierte Spülölmenge, sofern das integrierte Ventil 50 in seiner offenen Position ist.

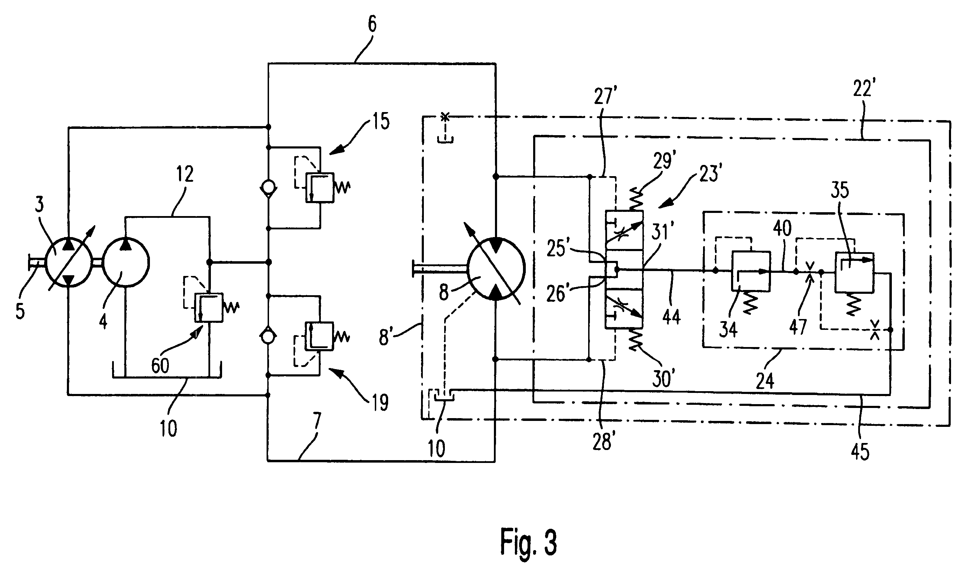

In Fig. 3 ist ein weiteres Ausführungsbeispiel dargestellt, welches im wesentlichen identisch mit dem Ausführungsbeispiel der Fig. 1 ist. Im Unterschied zu der Fig. 1 ist hierbei jedoch ein anderes Verbindungsventil 23' verwendet, welches in seiner Ruheposition die beiden Eingangsanschlüsse 25' und 26' mit seinem Ausgangsanschluss 31' verbindet. Damit wird sichergestellt, dass bei näherungsweise gleichen Drücken in der ersten Arbeitsleitung 6 und der zweiten Arbeitsleitung 7, wenn das Verbindungsventil 23' durch die erste Zentrierfeder 29' und die zweite Zentrierfeder 30' in seine Ruheposition gebracht ist, dennoch eine Entnahme von Druckmittel aus dem hydraulischen Kreislauf erfolgt. Die Entnahme von Druckmittel wird dabei zu gleichen Teilen aus der ersten Arbeitsleitung 6 und der zweiten Arbeitsleitung 7 vorgenommen. Dadurch bietet sich die Möglichkeit auch in einer Situation, wie beispielsweise einem Leerlauf, dem erhitzten hydraulischen System kühles Druckmittel über die Hilfspumpe 4 zuzuführen. Im dargestellten Ausführungsbeispiel ist die Spülvorrichtung 22' in eine Motoreinheit 8' integriert.

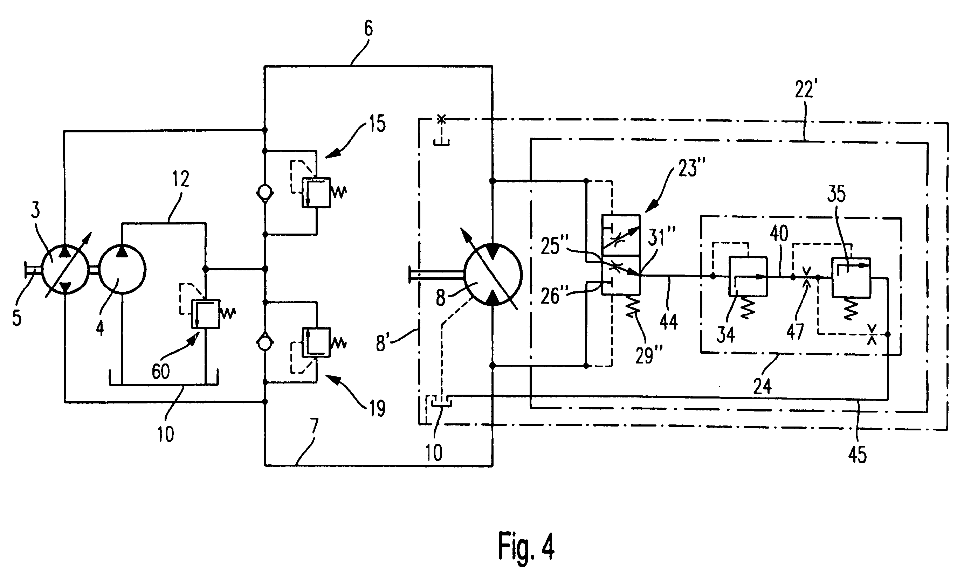

Bei dem in Fig. 4 dargestellten vierten Ausführungsbeispiel einer erfindungsgemäßen Spülvorrichtung 22', die im wesentlichen der Spülvorrichtung 22' aus Fig. 3 entspricht, erfolgt ein unmittelbarer Übergang zwischen den beiden Endpositionen des Verbindungsventils 23". Im Gegensatz zu der Darstellung der Fig. 3 wird also auf eine Mittelstellung des Verbindungsventils, in der die Eingangsanschlüsse 25' und 26" mit dem Ausganganschluss 31' verbunden sind, verzichtet. Dabei wird wiederum erreicht, das in jeder Position des Verbindungsventils 23" zumindest eine der beiden Arbeitsleitungen 6 oder 7 mit der Spülventileinheit 24 verbunden ist. Eine Spülung erfolgt daher auch bei einem annähernden Druckgleichgewicht in der ersten Arbeitsleitung 6 und der zweiten Arbeitsleitung 7, sofern der in dem Eingangskanal 44 herrschende Druck entsprechend den Ausführungen zu Fig. 1 innerhalb des Druckintervalls liegt. Zur Positionierung ist auch nur eine Druckfeder 29" erforderlich.

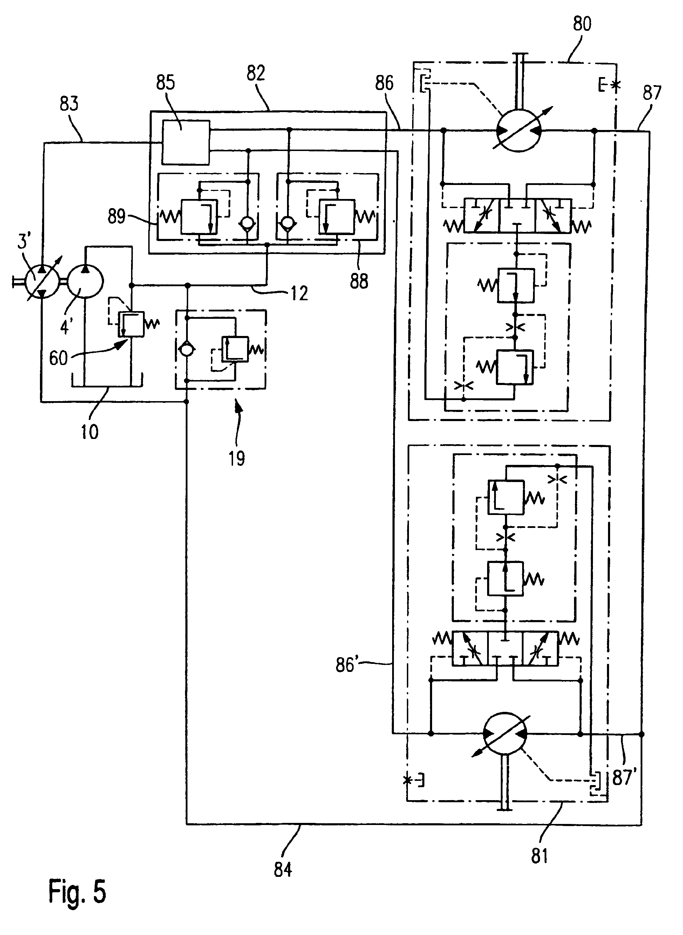

In Fig. 5 ist ein weiteres Ausführungsbeispiel für einen erfindungsgemäßen hydraulischen Kreislauf dargestellt. Der hydraulische Kreislauf umfasst dabei zwei Hydromotoreinheiten 80 und 81, wobei die beiden Motoreinheiten 80 und 81 identisch mit der Motoreinheiten 8' aus Fig. 3 sind. Um unnötige Wiederholungen zu vermeiden, wird daher auf eine erneute Beschreibung verzichtet.

Die erste Motoreinheit 80 wird über eine erste Arbeitsleitung 86 und eine zweite Arbeitsleitung 87 in den hydraulischen Kreislauf eingebunden. Die zweite Motoreinheit 81 ist ebenfalls über eine erste Arbeitsleitung 86' und eine zweite Arbeitsleitung 87' mit dem hydraulischen Kreislauf verbunden. Die erste Arbeitsleitung 86 der ersten Motoreinheit 80 und die erste Arbeitsleitung 86' der zweiten Motoreinheit 81 sind über einen Stromteiler 82 mit einer ersten Hauptleitung 83 verbunden. Die zweite Arbeitsleitung 87 der ersten Motoreinheit 80 und die zweite Arbeitsleitung 87' der zweiten Motoreinheit 81 sind mit einer zweiten Hauptleitung 84 verbunden. Die erste Hauptleitung 83 und die zweite Hauptleitung 84 sind an eine Hydropumpe 3' angeschlossen, welche gemeinsamen mit einer Hilfspumpe 4' angetrieben wird.

Der von der Hydropumpe 3' in die erste Hauptleitung 83 geförderte Volumenstrom wird in dem Stromteiler 82 mittels eines Teilerelements 85 in einem definierten Verhältnis aufgeteilt und der entsprechend geteilte Volumenstrom der ersten Arbeitsleitung 86 der ersten Motoreinheit 80 und der ersten Arbeitsleitung 86' der zweiten Motoreinheit 81 zugeführt.

In dem Stromteiler 82 ist eine erste Speiseventileinheit 88 und eine zweite Speiseventileinheit 89 vorgesehen, deren Eingangsseite jeweils mit dem Speisekanal 12 und deren Ausgangseite mit der ersten Arbeitsleitung 86 bzw. der ersten Arbeitsleitung 86' verbunden sind. Weiterhin ist eine dritte Speiseventileinheit vorgesehen, mit der der Speisekanal 12 mit der zweiten Hauptleitung 84 verbunden ist.

Durch die Anordnung der ersten Speiseventileinheit 88 und der zweiten Speiseventileinheit 89, die jeweils identisch mit der Speiseventileinheit 15 aus Fig. 1 aufgebaut sind, wird vorteilhaft der Wirkungsgrad bei Ansprechen eines der Druckbegrenzungsventile der Speiseventileinheiten 88 oder 89 verbessert.

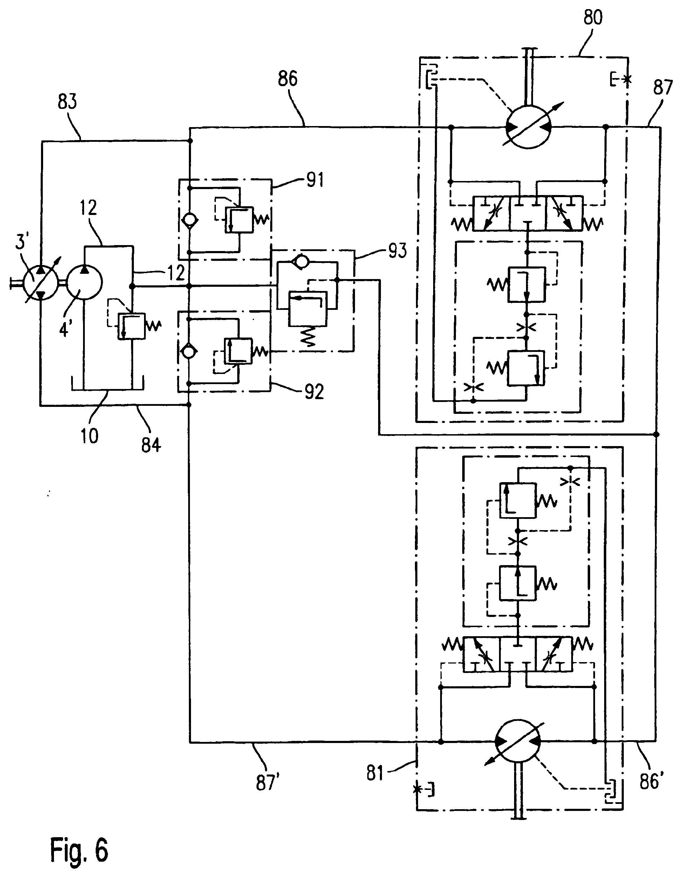

In Fig. 6 ist ein modifiziertes Ausführungsbeispiele des hydrostatischen Antriebs der Fig. 5 dargestellt, bei dem auf den Ölstromteiler 82 verzichtet wird. Die erste Motoreinheit 80 und die zweite Motoreinheit 81 sind in Serie miteinander verschaltet, wobei die zweite Arbeitsleitung 87 der ersten Motoreinheit 80 und die erste Arbeitsleitung 86' der zweiten Motoreinheit 81 miteinander zu einer Verbindungsleitung verbunden sind. In dem dargestellten Ausführungsbeispiels ist daher lediglich die erste Arbeitsleitung 86 der ersten Motoreinheit 80 mit der ersten Hauptleitung 83 verbunden und die zweite Arbeitsleitung 87' der zweiten Motoreinheit 81 mit der zweiten Hauptleitung 84 verbunden.

Der Speisekanal 12 ist über drei Speiseventileinheiten 91, 92 und 93 jeweils mit der ersten Hauptleitung 83, der zweiten Hauptleitung 84 sowie der Verbindungsleitung bestehend aus der zweiten Arbeitsleitung 87 der ersten Motoreinheit 80 und der ersten Arbeitsleitung 86' der zweiten Motoreinheit 81 verbunden. Dies hat den Vorteil, dass bei einem starken Absinken des Drucks in der Verbindungsleitung ein Einspeisen von Druckmittel auch in der Verbindungsleitung erfolgen kann. Ein solcher starker Druckabfall ist beispielsweise dann denkbar, wenn aufgrund eines durchdrehenden Rades eine der beiden Motoreinheiten 80 bzw. 81 kein Drehmoment Übertragen kann, so dass der gesamte Druckabfall an der jeweils anderen Motoreinheit 81 bzw. 80 erfolgt.

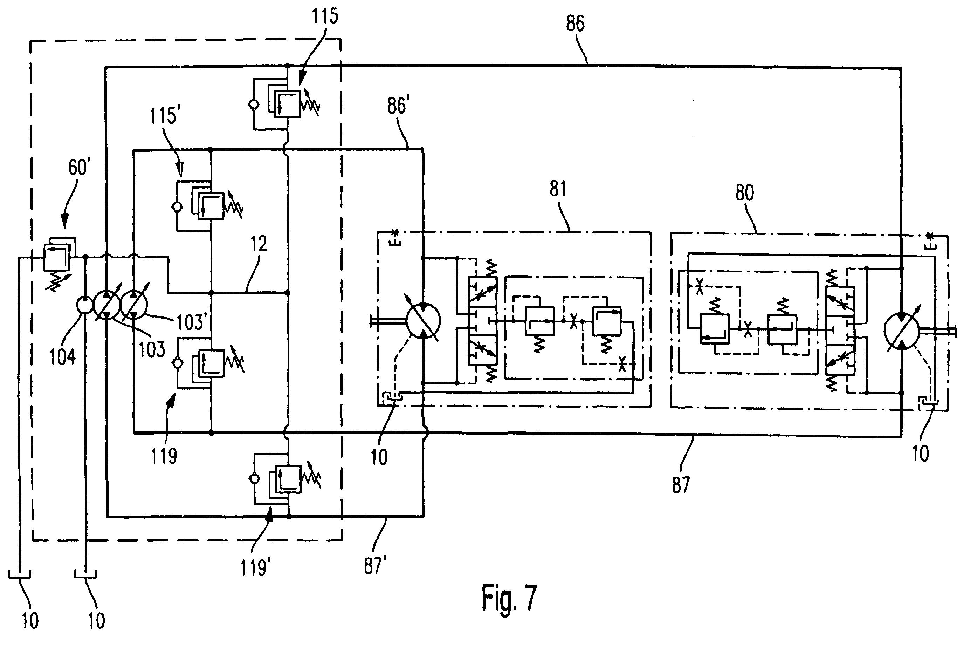

Fig. 7 zeigt ein weiteres Beispiel für einen erfindungsgemäßen hydraulischen Kreislauf. Bei dem dargestellten hydraulischen Kreislauf fördert eine gemeinsamen mit der Hilfspumpe 104 angetriebene Hydropumpe 103 in die erste Arbeitsleitung 86 der ersten Motoreinheit 80. Stromabwärts der ersten Motoreinheit 80 strömt das Druckmittel über die zweite Arbeitsleitung 87 der ersten Motoreinheit 80 zu einer zweiten Hydropumpe 103', die gemeinsam mit der ersten Hydropumpe 103 von einer nicht dargestellten Antriebsmaschine angetrieben wird. Der hydraulische Kreislauf wird auf der Förderseite der zweiten Hydropumpe 103' durch die erste Arbeitsleitung 86' der zweiten Motoreinheit 81 sowie stromabwärts der zweiten Motoreinheit 81 durch die zweite Arbeitsleitung 87' der zweiten Motoreinheit 81 vervollständigt, wobei über die zweite Arbeitsleitung 87' der zweiten Motoreinheit 81' das Druckmittel wiederum der Saugseite der ersten Hydropumpe 103 zugeführt wird. Eine Umkehr der Förderrichtung ist selbstverständlich ebenfalls möglich.

Die ersten Arbeitsleitungen 86 und 86' sind mit dem Speisekanal 12 über jeweils eine Speiseventileinheit 115 und 115' verbunden. Analog der Anordnung aus Fig. 1 ist die jeweils zweite Arbeitsleitung 87 und 87' ebenfalls mit dem Speisekanal 12 über jeweils eine weitere Speiseventileinheit 119 und 119' verbunden.

Bei einer solchen seriellen Anordnung von mehreren Motoreinheiten 80, 81 ist eine Entnahme von Druckmittel aus der jeweils ersten Arbeitsleitung 86, 86' bzw. der jeweils zweiten Arbeitsleitung 87, 87' nur dann sinnvoll, wenn die Entnahme lediglich in einem nach oben begrenzten Druckintervall durchgeführt wird, so wie dies für die vorausgegangenen hydraulischen Kreisläufe schon ausführlich dargestellt wurde.

Die vermeintliche Niederdruckseite der ersten Motoreinheit 80 bzw. der zweiten Motoreinheit 81 kann aufgrund der seriellen Verschaltung einen Druck aufweisen, der lediglich geringfügig unterhalb des Drucks der Hochdruckseite liegt. Dies würde zu einem unzulässig hohen Spülölstrom führen. Durch die Verwendung der erfindungsgemäßen Spülvorrichtung wird in einem solchen Fall die Entnahme von Druckmittel aus der Arbeitsleitung mit dem vermeintlichen Niederdruck verhindert, indem die Verbindung zu dem Tankvolumen 10 unterbrochen wird. Damit wird durch die erfindungsgemäße Spülvorrichtung eine effektive Spülung bei gleichzeitiger Begrenzung des möglichen Verlusts auch für solche hydraulischen Kreisläufen der ermöglicht, welche einen nicht definierten Niederdruck in einer der Arbeitsleitungen aufweisen können. Weitere Kombinationen von Teilen der einzelnen vorgestellten hydraulischen Kreisläufe sind möglich.

## Patentansprüche

1. Spülvorrichtung für einen hydraulischen Kreislauf mit einer ersten Arbeitsleitung (6) und einer zweiten Arbeitsleitung (7), mit einem Verbindungsventil (23, 23', 23") und einer dem Verbindungsventil nachgeschalteten Spülventileinheit (24, 24'), die über das Verbindungsventil (23, 23', 23") mit der ersten oder der zweiten Arbeitsleitung (6, 7) verbindbar ist und über die ein eingangsseitiger Anschluss der Spülventileinheit (24) bei Überschreiten eines ersten festgelegten Druckschwellwerts mit einem Tankvolumen (10) verbunden wird,
**dadurch gekennzeichnet,**
**dass** die Verbindung des eingangsseitigen Anschlusses der Spülventileinheit (24) mit dem Tankvolumen (10) unterbrochen wird, wenn an dem eingangsseitigen Anschluss der Spülventileinheit (24) ein gegenüber dem ersten Druckschwellwert höherer zweiter, festgelegter Druckschwellwert überschritten wird.

2. Spülvorrichtung nach Anspruch 1,
**dadurch gekennzeichnet,**
**dass** die Spülventileinheit (24) ein Speisedruckhalteventil (35) und ein Abschaltventil (34) umfasst.

3. Spülvorrichtung nach Anspruch 1 oder 2,
**dadurch gekennzeichnet,**
**dass** zumindest das Abschaltventil (34) stromaufwärts einer die Spülmenge begrenzenden Drosselstelle (47) angeordnet ist.

4. Spülvorrichtung nach einem der Ansprüche 1 bis 3,
**dadurch gekennzeichnet,**
**dass** das Speisedruckhalteventil (35) und das Abschaltventil (34) in einem einzigen, kombinierten Ventil (50) integriert sind.

5. Spülvorrichtung nach einem der Ansprüche 1 bis 4,
**dadurch gekennzeichnet,**
**dass** das Speisedruckhalteventil (35) und das Abschaltventil (34) federbelastete Schaltventile sind.

6. Spülvorrichtung nach einem der Ansprüche 1 bis 5,
**dadurch gekennzeichnet,**
**dass** der eingangsseitige Anschluss der Spülventileinheit (24) über das Verbindungsventil (23), welches aus einer Neutralstellung in eine erste oder zweite Schaltposition (32, 33) bringbar ist, in der ersten und der zweiten Schaltposition (32, 33) jeweils mit derjenigen Arbeitsleitung (6, 7) verbunden ist, in der der niedrigere Druck herrscht und dass über das Verbindungsventil (23) in jeder möglichen Position des Verbindungsventils (23') der eingangsseitige Anschluss mit der ersten Arbeitsleitung (6) und/oder der zweiten Arbeitsleitung (7) verbunden ist.

7. Hydraulischer Kreislauf mit zumindest einer ersten Hydromotoreinheit und einer zweiten Hydromotoreinheit (80, 81), die jeweils mit einer ersten Arbeitsleitung (86, 86') und einer zweiten Arbeitsleitung (87, 87') verbunden sind, wobei die erste Hydromotoreinheit (80) und die zweite Hydromotoreinheit (81) eine Spülvorrichtung (22) mit jeweils einem Verbindungsventil (23, 23', 23") aufweisen, wobei zumindest jeweils eine der Arbeitsleitungen (86, 86', 87, 87') über das jeweilige Verbindungsventil (23, 23', 23") mit einem eingangsseitigen Anschluss einer Spülventileinheit (24, 24') verbindbar ist, über die ein eingangsseitiger Anschluss der Spülventileinheit (24, 24') bei Überschreiten eines ersten festgelegten Druckschwellwerts mit einem Tankvolumen (10) verbunden wird,
**dadurch gekennzeichnet,**
**dass** jedem Verbindungsventil (23, 23', 23") eine Spülventileinheit (24, 24') nachgeschaltet ist und
und
**dass** die Verbindung des eingangsseitigen Anschlusses der jeweiligen Spülventileinheit (24, 24') mit dem Tankvolumen (10) unterbrochen wird, wenn an dem eingangsseitigen Anschluss der jeweiligen Spülventileinheit (24, 24') ein gegenüber dem ersten Druckschwellwert höherer zweiter festgelegter Druckschwellwert überschritten wird.

8. Hydraulischer Kreislauf nach Anspruch 7,
**dadurch gekennzeichnet,**
**dass** die jeweils ersten Arbeitsleitungen (86, 86') der ersten Hydromotoreinheit (80) und der zweiten Hydromotoreinheit (81) oder die jeweils zweiten Arbeitsleitungen (87, 87') der ersten Hydromotoreinheit (80) und der zweiten Hydromotoreinheit (81) über einen Stromteiler (82) mit zumindest einer Hydropumpe (3) verbunden sind.

9. Hydraulischer Kreislauf nach Anspruch 7 oder 8,
**dadurch gekennzeichnet,**
**dass** die jeweils ersten Arbeitsleitungen (86, 86') der ersten Hydromotoreinheit (80) und der zweiten Hydromotoreinheit (81) mit der zumindest einen Hydropumpe (3') gemeinsam über eine erste Hauptleitung (83) und die jeweils zweiten Arbeitsleitungen (87, 87') der ersten Hydromotoreinheit (80) und der zweiten Hydromotoreinheit (81) über eine zweite Hauptleitung (84) gemeinsam mit der Hydropumpe (3') verbunden sind und
**dass** zumindest die zweite Hauptleitung (84) über eine Speiseventileinheit (19) mit einer Hilfspumpe (4') verbunden ist.

10. Hydraulischer Kreislauf nach einem der Ansprüche 7 bis 9,
**dadurch gekennzeichnet,**
**dass** die jeweils ersten Arbeitsleitungen (86, 86') der ersten Hydromotoreinheit (80) und der zweiten Hydromotoreinheit (81) über jeweils eine Speiseventileinheit (80, 89) mit einer Hilfspumpe (4') verbunden sind.

11. Hydraulischer Kreislauf nach Anspruch 7,
**dadurch gekennzeichnet,**
**dass** die erste Arbeitsleitung (86) der ersten Hydromotoreinheit (80) und die zweite Arbeitsleitung (87') der zweiten Hydromotoreinheit (81) mit einer Hydropumpe (3') verbunden sind und die zweite Arbeitsleitung (87) der ersten Hydromotoreinheit (80) mit der ersten Arbeitsleitung (87') der zweiten Hydromotoreinheit (81) zu einer Verbindungsleitung verbunden ist.

12. Hydraulischer Kreislauf nach Anspruch 11,
**dadurch gekennzeichnet,**
**dass** die erste Arbeitsleitung (86) der ersten Hydromotoreinheit (80) und/oder die zweite Arbeitsleitung (87') der zweiten Hydromotoreinheit (81) und/oder die Verbindungsleitung über jeweils eine Speiseventileinheit (91, 92, 93) mit einer Hilfspumpe (4') verbunden ist/sind.

13. Hydraulischer Kreislauf nach Anspruch 11 oder 12,
**dadurch gekennzeichnet,**
**dass** die zweite Arbeitsleitung (87) der ersten Hydromotoreinheit (80) und die erste Arbeitsleitung (86') der zweiten Hydromotoreinheit (81) über eine weitere Hydropumpe (103') miteinander verbunden sind.

14. Hydraulischer Kreislauf nach Anspruch 13,
**dadurch gekennzeichnet,**
**dass** die zweite Arbeitsleitung (87) der ersten Hydromotoreinheit (80) und die erste Arbeitsleitung (86') der zweiten Hydromotoreinheit (81) über jeweils eine Speiseventileinheit (115, 115', 119, 119') mit einer Hilfspumpe (104) verbunden sind.

## Claims

1. Flushing device for a hydraulic circuit having a first working line (6) and a second working line (7), having a connecting valve (23, 23', 23") and a flushing valve unit (24, 24*'*) connected downstream of the connecting valve, which unit can be connected to the first or the second working line (6, 7) via the connecting valve (23, 23', 23") and is connected to a tank volume (10) via the inlet-side connection of the flushing valve unit (24) if a first defined pressure threshold value is exceeded,
**characterised**
**in that** the connection of the inlet-side connection of the flushing valve unit (24) to the tank volume (10) is interrupted if a second, defined pressure threshold value higher than the first pressure threshold value is exceeded at the inlet-side connection of the flushing valve unit (24).

2. Flushing device according to Claim 1,
**characterised**
**in that** the flushing valve unit (24) comprises a feed pressure-maintaining valve (35) and a switch-off valve (34).

3. Flushing device according to Claim 1 or 2,
**characterised**
**in that** at least the switch-off valve (34) is arranged upstream of a throttle point (47) limiting the flushing quantity.

4. Flushing device according to one of Claims 1 to 3,
**characterised**
**in that** the feed pressure-maintaining valve (35) and the switch-off valve (34) are integrated in a single, combined valve (50).

5. Flushing device according to one of Claims 1 to 4,
**characterised**
**in that** the feed pressure-maintaining valve (35) and the switch-off valve (34) are spring-loaded switching valves.

6. Flushing device according to one of Claims 1 to 5,
**characterised**
**in that** the inlet-side connection of the flushing valve unit (24) is connected via the connecting valve (23), which can be brought from a neutral position into a first or second switching position (32, 33), in the first and the second switching position (32, 33) respectively to that working line (6, 7) in which the lower pressure prevails, and in that the inlet-side connection is connected to the first working line (6) and/or the second working line (7) via the connecting valve (23) in every possible position of the connecting valve (23').

7. Hydraulic circuit having at least one first hydraulic motor unit and one second hydraulic motor unit (80, 81) which are each connected to a first working line (86, 86') and a second working line (87, 87'), the first hydraulic motor unit (80) and the second hydraulic motor unit (81) having a flushing device (22) with a respective connecting valve (23, 23', 23"), it being possible for at least respectively one of the working lines (86, 86', 87, 87') to be connected via the respective connecting valve (23, 23', 23") to an inlet-side connection of a flushing valve unit (24, 24'), via which an inlet-side connection of the flushing valve unit (24, 24') is connected to a tank volume (10) if a first defined pressure threshold value is exceeded,
**characterised**
**in that** a flushing valve unit (24, 24') is connected downstream of each connecting valve (23, 23', 23"), and
**in that** the connection of the inlet-side connection of the respective flushing valve unit (24, 24') to the tank volume (10) is interrupted if a second defined pressure threshold value higher than the first pressure threshold value is exceeded at the inlet-side connection of the respective flushing valve unit (24, 24').

8. Hydraulic circuit according to Claim 7,
**characterised**
**in that** the respective first working lines (86, 86') of the first hydraulic motor unit (80) and of the second hydraulic motor unit (81) or the respective second working lines (87, 87') of the first hydraulic motor unit (80) and of the second hydraulic motor unit (81) are connected to at least one hydraulic pump (3) via a flow divider (82).

9. Hydraulic circuit according to Claim 7 or 8,
**characterised**
**in that** the respective first working lines (86, 86') of the first hydraulic motor unit (80) and of the second hydraulic motor unit (81) are connected to the at least one hydraulic pump (3') jointly via a first main line (83), and the respective second working lines (87, 87') of the first hydraulic motor unit (80) and of the second hydraulic motor unit (81) are connected jointly to the hydraulic pump (3') via a second main line (84), and
**in that** at least the second main line (84) is connected to an auxiliary pump (4') via a feed valve unit (19).

10. Hydraulic circuit according to one of Claims 7 to 9,
**characterised**
**in that** the respective first working lines (86, 86') of the first hydraulic motor unit (80) and of the second hydraulic motor unit (81) are connected to an auxiliary pump (4') via a respective flushing valve unit (88, 89).

11. Hydraulic circuit according to Claim 7,
**characterised**
**in that** the first working line (86) of the first hydraulic motor unit (80) and the second working line (87') of the second hydraulic motor unit (81) are connected to a hydraulic pump (3'), and the second working line (87) of the first hydraulic motor unit (80) is connected to the first.working line (87') of the second hydraulic motor unit (81) to form a connecting line.

12. Hydraulic circuit according to Claim 11,
**characterised**
**in that** the first working line (86) of the first hydraulic motor unit (80) and/or the second working line (87') of the second hydraulic motor unit (81) and/or the connecting line is/are connected to an auxiliary pump (4') via a respective feed valve unit (91, 92, 93).

13. Hydraulic circuit according to Claim 11 or 12,
**characterised**
**in that** the second working line (87) of the first hydraulic motor unit (80) and the first working line (86') of the second hydraulic motor unit (81) are connected to one another via a further hydraulic pump (103').

14. Hydraulic circuit according to Claim 13,
**characterised**
**in that** the second working line (87) of the first hydraulic motor unit (80) and the first working line (86') of the second hydraulic motor unit (81) are connected to an auxiliary pump (104) via a respective flushing valve unit (115, 115', 119, 119').

## Revendications

1. Dispositif d'échange pour un circuit hydraulique avec une première conduite de travail (6) et une seconde conduite de travail (7), avec une soupape de liaison (23, 23', 23") et une unité de soupapes de vidange (24, 24') placée en aval de la soupape de liaison, unité qui peut être reliée par le biais de la soupape de liaison (23, 23', 23'') à la première ou à la seconde conduite de travail (6, 7) et par le biais de laquelle un raccord côté entrée de l'unité de soupapes de vidange (24) est relié en cas de dépassement d'une première valeur seuil de pression établie à un volume de réservoir (10),
**caractérisé en ce que** la liaison du raccord côté entrée de l'unité de soupapes de vidange (24) au volume de réservoir (10) est interrompue si au raccord côté entrée de l'unité de soupapes de vidange (24) une seconde valeur seuil de pression établie, supérieure à la première valeur seuil de pression, est dépassée.

2. Dispositif d'échange selon la revendication 1,
**caractérisé en ce que** l'unité de soupapes de vidange (24) comprend une soupape de maintien de pression d'alimentation (35) et une soupape de coupure (34).

3. Dispositif d'échange selon la revendication 1 ou 2,
**caractérisé en ce qu'**au moins la soupape de coupure (34) est disposée en amont d'un lieu d'étranglement (47) limitant la quantité de vidange.

4. Dispositif d'échange selon l'une des revendications 1 à 3,
**caractérisé en ce que** la soupape de maintien de pression d'alimentation (35) et la soupape de coupure (34) sont intégrées dans une seule soupape combinée (50).

5. Dispositif d'échange selon l'une des revendications 1 à 4,
**caractérisé en ce que** la soupape de maintien de pression d'alimentation (35) et la soupape de coupure (34) sont des soupapes commandées par ressort.

6. Dispositif d'échange selon l'une des revendications 1 à 5,
**caractérisé en ce que** le raccord côté entrée de l'unité de soupapes de vidange (24) est relié par le biais de la soupape de liaison (23), laquelle peut être mise depuis une position neutre dans une première ou seconde position de commutation (32, 33), dans la première et la seconde position de commutation (32, 33) respectivement à la conduite de travail (6, 7) dans laquelle la plus faible pression règne, et **en ce que** le raccord côté entrée est relié à la première conduite de travail (6) et/ou à la seconde conduite de travail (7) par le biais de la soupape de liaison (23) dans chaque position possible de la soupape de liaison (23').

7. Circuit hydraulique avec au moins une première unité de moteurs hydrauliques et une seconde unité de moteurs hydrauliques (80, 81) qui sont respectivement reliées à une première conduite de travail (86, 86') et à une seconde conduite de travail (87, 87'), la première unité de moteurs hydrauliques (80) et la seconde unité de moteurs hydrauliques (81) comportant un dispositif d'échange (22) avec respectivement une soupape de liaison (23, 23', 23"), sachant qu'au moins respectivement une des conduites de travail (86, 86', 87, 87') peut être reliée par le biais de la soupape respective de liaison (23, 23', 23'') à un raccord côté entrée d'une unité de soupapes de vidange (24, 24'), par laquelle un raccord côté entrée de l'unité de soupapes de vidange (24,24') en cas de dépassement d'une première valeur seuil de pression établie est relié à un volume de réservoir (10),
**caractérisé en ce qu'**une unité de soupapes de vidange (24, 24') est placée en aval de chaque soupape de liaison (23, 23', 23") et
**en ce que** la liaison du raccord côté entrée de l'unité respective de soupapes de vidange (24, 24') au volume de réservoir (10) est interrompue si au raccord côté entrée de l'unité respective de soupapes de vidange (24, 24') une seconde valeur seuil de pression établie, supérieure à la première valeur seuil de pression, est dépassée. '

8. Circuit hydraulique selon la revendication 7,
**caractérisé en ce que** respectivement les premières conduites de travail (86, 86') de la première unité de moteurs hydrauliques (80) et de la seconde unité de moteurs hydrauliques (81) ou respectivement les secondes conduites de travail (87, 87') de la première unité de moteurs hydrauliques (80) et de la seconde unité de moteurs hydrauliques (81) sont reliées par le biais d'un diviseur de débit (82) à au moins une pompe hydraulique (3).

9. Circuit hydraulique selon la revendication 7 ou 8,
**caractérisé en ce que** respectivement les premières conduites de travail (86, 86') de la première unité de moteurs hydrauliques (80) et de la seconde unité de moteurs hydrauliques (81) sont reliées ensemble à au moins l'une des pompes hydrauliques (3') par le biais d'une première conduite principale (83), et respectivement les secondes conduites de travail (87, 87') de la première unité de moteurs hydrauliques (80) et de la seconde unité de moteurs hydrauliques (81) sont reliées ensemble par le biais d'une seconde conduite principale (84) à la pompe hydraulique (3'), et
**en ce qu'**au moins la seconde conduite principale (84) est reliée par le biais d'une unité de soupapes d'alimentation (19) à une pompe auxiliaire (4').

10. Circuit hydraulique selon l'une des revendications 7 à 9,
**caractérisé en ce que** respectivement les premières conduites de travail (86, 86') de la première unité de moteurs hydrauliques (80) et de la seconde unité de moteurs hydrauliques (81) sont reliées par le biais de respectivement une unité de soupapes d'alimentation (80, 89) à une pompe auxiliaire (4').

11. Circuit hydraulique selon la revendication 7,
**caractérisé en ce que** la première conduite de travail (86) de la première unité de moteurs hydrauliques (80) et la seconde conduite de travail (87') de la seconde unité de moteurs hydrauliques (81) sont reliées à une pompe hydrauliques (3') et la seconde conduite de travail (87) de la première unité de moteurs hydrauliques (80) est reliée à la première conduite de travail (87') de la seconde unité de moteurs hydrauliques (81) de manière à former une conduite de liaison.

12. Circuit hydraulique selon la revendication 11,
**caractérisé en ce que** la première conduite de travail (86) de la première unité de moteurs hydrauliques (80) et/ou la seconde conduite de travail (87') de la seconde unité de moteurs hydrauliques (81) et/ou la conduite de liaison est/sont reliée(s) à une pompe auxiliaire (4') par le biais de respectivement une unité de soupapes d'alimentation (91,92,93).

13. Circuit hydraulique selon la revendication 11 ou 12,
**caractérisé en ce que** la première conduite de travail (87) de la première unité de moteurs hydrauliques (80) et la première conduite de travail (86') de la seconde unité de moteurs hydrauliques (81) sont reliées l'une à l'autre par le biais d'une autre pompe hydraulique (103').

14. Circuit hydraulique selon la revendication 13,
**caractérisé en ce que** la seconde conduite de travail (87) de la première unité de moteurs hydrauliques (80) et la première conduite de travail (86') de la seconde unité de moteurs hydrauliques (81) sont reliées par le biais de respectivement une unité de soupapes d'alimentation (115, 115', 119,119') à une pompe auxiliaire (104).
